# EUROPÄISCHE PATENTANMELDUNG

(11) **EP 0 528 309 A1**
(43) Veröffentlichungstag der Anmeldung: **24.02.1993**
(21) Anmeldenummer: 92113557.0
(22) Anmeldetag: 08.08.1992
(51) Int. Cl.: A01D 41/12, B65G 69/10, G01N 1/20

(54) **Entnahmevorrichtung für eine Gutmenge**

(30) Priorität: 16.08.1991 DE 4127154
(71) Anmelder: DEERE & COMPANY, Moline, Illinois 61265 (US)
(72) Erfinder: Becker, Herbert, W-6660 Zweibrücken (DE)
(74) Vertreter: Feldmann, Bernhard

(57) **Zusammenfassung**

2.1. Entnahmevorrichtungen für Gutmengen werden z. B. bei Mähdreschern dazu verwendet, von dem in einen Sammelbehälter (18) geförderten Getreide eine Probe für eine Analyse zu nehmen. Bei herkömmlichen Entnahmevorrichtungen kann eine Probe entweder nur so lange genommen werden, bis der Sammelbehälter einen bestimmten Füllpegel erreicht hat, oder man kann eine aktuelle Probe von vorher genommenen Proben nicht genau trennen.

2.2. Es wird eine Entnahmevorrichtung (44) mit einem grundsätzlich geschlossenen Gutleitelement (46) vorgeschlagen, das eine betätigbare Schließvorrichtung (48) zur wahlweisen Annahme von Probegut aufweist und dieses einem Entnahmebehälter (76) einer Probeentnahmevorrichtung (52) zuführt.

2.3. Diese Entnahmevorrichtung (44) kann an Mähdreschern verwendet werden.

## Beschreibung

Die Erfindung betrifft eine Entnahmevorrichtung für eine Gutmenge aus einem Gutstrom, insbesondere zum Nehmen einer Getreideprobe aus einem Sammelbehälter eines Mähdreschers, mit einem Gutleitelement, das aufnahmeseitig von dem Gutstrom beaufschlagt wird und abgabeseitig zu einer Probeentnahmevorrichtung führt.

Vorrichtungen zur Entnahme einer Gutmenge aus einem Gutstrom werden benutzt, um die Qualität des in dem Gutstrom enthaltenen Guts in zeitlichen Abständen prüfen zu können. Diese Vorrichtungen finden z. B. Anwendung in Mähdreschern, in Fördersystemen von Behältern für Schüttgüter aller Art und dergleichen.

So Zeigt das DE-GM-83 29 868 eine Entnahmevorrichtung in der Form eines einlaßseitig stets offenen Rohrs, in dessen Innenraum sich ein Schneckenförderer befindet. Der Schneckenförderer kann manuell betrieben werden und fördert das in das offene Ende des Rohrs ständig eindringende Gut zu einer Abgabeöffnung.

Diese Entnahmevorrichtung ist insofern nachteilig, als das Rohr stets Gut annimmt, so daß an der Abgabeöffnung nicht feststellbar ist, aus welchem Abschnitt des Gutstroms die Probe stammt.

Bei einer anderen Entnahmevorrichtung (EP-PS-0 180 660) führt eine Rutsche von einem in einen Sammelbehälter eines Mähdreschers eintretenden Eingangsförderer zu einer Probeentnahmeklappe, die in zwei Stellungen kippbar ist und sich in einer Außenwand des Sammelbehälters befindet. In einer ersten Stellung nimmt die Probeentnahmeklappe Gut auf, während sie in einer zweiten Stellung einen Zugriff auf das darin befindliche Gut ermöglicht.

Diese bewährte Entnahmevorrichtung ist insofern verbesserungsbedürftig, als die Klappe zur Innenseite des Sammelbehälters hin offen ist und ab einem bestimmten Füllpegel kein neues Gut mehr annehmen kann.

Die der Erfindung zugrundeliegende Aufgabe wird darin gesehen, eine Entnahmevorrichtung für eine Gutmenge mit einem Gutleitelement vorzuschlagen, das aufnahmeseitig von dem Gutstrom beaufschlagt wird und abgabeseitig zu einer Probeentnahmevorrichtung führt, die stets eine Probe des aktuellen Gutstroms zur Verfügung stellen kann.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird nur dann Gut für eine Gutprobe angenommen, wenn dies gewünscht ist. Außerdem dringt kein sonstiges Gut innnerhalb des Sammelbehälters in das Gutleitelement ein, da dieses auf seiner gesamten Länge verschlossen ist. Wenn das Gutleitelement aufnahmeseitig bis zu einem Eintragsförderer geführt ist, kann es so lange Gut für eine Probe annehmen, bis der Füllpegel den Eintragsförderer erreicht hat.

Ist darüberhinaus ein Entnahmebehälter vorgesehen, der zur Annahme des Probeguts entsprechend positioniert ist, ist kein separater Behälter oder dergleichen erforderlich, um das Gut aufzunehmen; vielmehr kann mit diesem Entnahmebehälter das Probegut zu einer Meßstation, z. B. zum Messen der Gutfeuchte, befördert werden, ohne daß das Gut in die Hand genommen werden müßte, was eine Änderung des Feuchtigkeitsgrades bewirken könnte.

Mündet das Gutleitelement direkt in ein Gehäuse, das vorzugsweise auch den Entnahmebehälter aufnimmt und innerhalb wie außerhalb eines Sammelbehälters angeordnet sein kann, ist auch im Bereich der Entnahme des Probeguts eine Vermengung mit dem sonstigen Gutstrom unterbunden.

Eine einfache Art, den Zeitpunkt der Aufnahme des Probeguts aus dem Gutstrom zu bestimmen, besteht in der Verwendung einer Schließvorrichtung, die beliebig, insbesondere mittels einer Betätigungsvorrichtung, in eine schließende und in eine öffnende Stellung gebracht werden kann. Die Schließvorrichtung kann als eine Klappe, ein Schieber oder dergleichen ausgebildet werden.

Die Betätigungsvorrichtung ist einfach im Aufbau, wenn sie nur in eine Stellung mittels eines Seilzugs, Gestänges oder dergleichen bewegt werden muß, während sie zu der anderen Stellung mittels einer Feder gezogen wird, was durch die Verwendung einer Schwenkwelle und eines dazu exzentrischen Angriffspunkts der Betätigungsvorrichtung an der Schließvorrichtung ermöglicht wird. Mühelos kann sowohl die Probeentnahme eingeleitet, als auch die Probe selbst entnommen werden, wenn sich eine Bedienvorrichtung für die Betätigungsvorrichtung und der Entnahmebehälter dicht beieinander befinden, so daß beide Vorgänge mit zwei Händen schnell ausführbar sind.

Wenn das Gehäuse an seiner Unterseite eine Auslaßöffnung aufweist, kann überschüssiges Probegut, das nicht mehr von dem Entnahmebehälter aufgenommen wird, das Gehäuse verlassen, anstatt es auf diese Weise zu füllen. Befindet sich das Gehäuse in dem Sammelbehälter, gelangt das Probegut auf diese Weise zu dem übrigen Gut und es bietet sich an, das Probegut nach der Prüfung durch eine entsprechende Öffnung in der Probeentnahmevorrichtung zu dem Gutstrom zurückzuführen. Befindet sich das Gehäuse außerhalb des Sammelbehälters, kann mit einem Sack, einem Eimer oder einem sonstigen Behältnis das sich darin ansammelnde Gut jedenfalls von Zeit zu Zeit entnommen werden.

Eine sichere Unterbringung des Entnahmebehälters ist gewährleistet, wenn dieser mittels einer Schnappsicherung, einer formschlüssigen Verbindung durch eine Nut und eine Feder oder dergleichen gegen Verschieben gesichert ist.

Das Einfüllen des Probeguts in das Gehäuse wird durch eine entsprechende Formgebung des Entnahmebehälters möglich bzw. vereinfacht. Diese Formgebung ist so gewählt, daß der Probeentnahmebehälter ausreichend weit in einer Öffnung gekippt oder in dieser um seine Längsachse gedreht werden kann. Im letzten Fall kann der Entnahmebehälter gefüllt in die Öffnung eingeführt und anschließend zum Entleeren "auf den Kopf" gedreht werden.

Der Entnahmebehälter läßt sich leicht handhaben, wenn er mit einem Griff versehen ist.

Eine mit wenigen und kostengünstigen Mitteln herstellbare Schließvorrichtung für das Gutleitelement ist in der Verwendung einer z. B. aus Blech gebildeten Klappe zu sehen, die um eine Welle schwenkbar gelagert ist.

In der Zeichnung ist ein nachfolgend näher beschriebenes Ausführungsbeispiel der Erfindung dargestellt. Es zeigt:
- Fig. 1: eine Erntemaschine mit einer erfindungsgemäßen Entnahmevorrichtung und

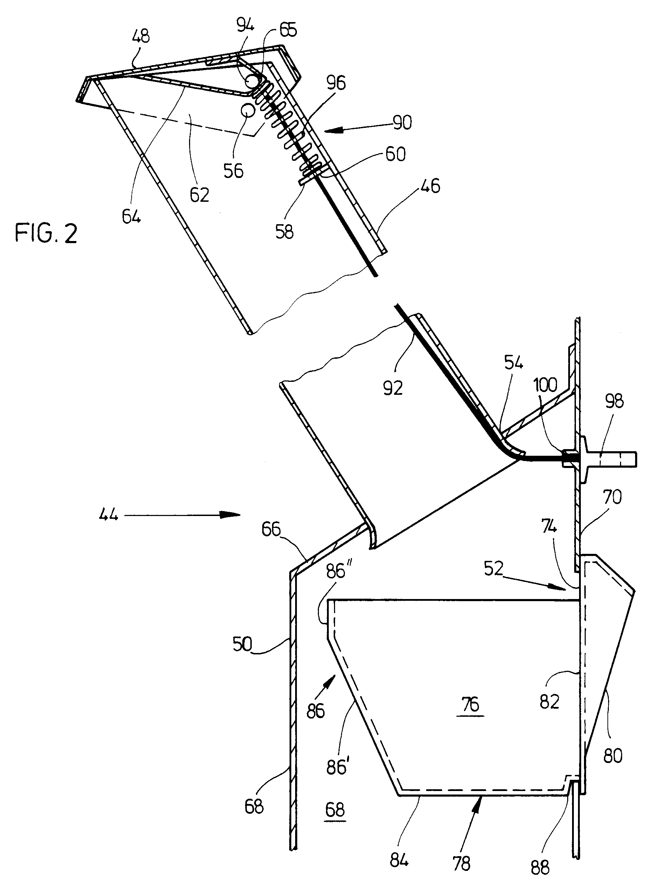

- Fig. 2: die Entnahmevorrichtung aus Figur 1 in vergrößerter Darstellung.

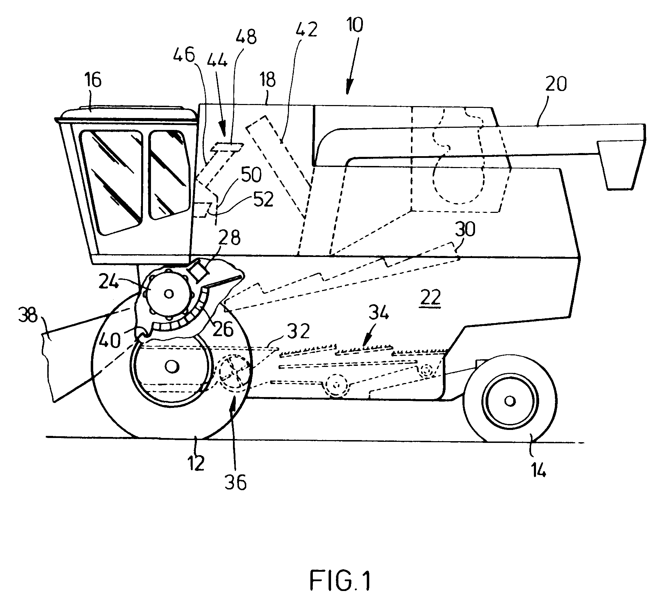

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage, ein Förderwerk für Schüttgut wie Getreide, Mais, Reis oder dergleichen in Frage kommen. An die Fahrerkabine 16 schließt sich rückwärtig ein Sammelbehälter 18 an, der in ihn abgegebenes Gut über ein Entleerrohr 20 nach außen abgeben kann. Der Sammelbehälter 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30 sowie auf einem Vorbereitungsboden 32 und Sieben 34 wird eine weitere Trennung des geernteten Guts durchgeführt, wobei schließlich der ausgedroschene Gutanteil in den Sammelbehälter 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

Das von den Sieben 34 abgesonderte Erntegut wird dem Sammelbehälter 18 über einen Eintragsförderer 42 zugeführt, der ungefähr im Schnittpunkt der horizontalen Diagonalen des Sammelbehälters 18 endet. Das von dem Eintragsförderer 42 zugeführte Gut füllt den Sammelbehälter 18 vom Boden her bis zu dessen oberer Kante. Die Zustände, die Zusammensetzung und die Art des Guts können sich während des Einsatzes der Erntemaschine 10 ändern, so daß hiervon Proben für eine Analyse genommen werden.

Zur Probenentnahme ist eine Entnahmevorrichtung 44 vorgesehen, die ein Gutleitelement 46 mit einer Schließvorrichtung 48, ein Gehäuse 50 und eine Probeentnahmevorrichtung 52 enthält.

Die Entnahmevorrichtung 44 befindet sich bei diesem Ausführungsbeispiel innerhalb des Sammelbehälters 18, und die Probeentnahmevorrichtung 52 ist von der Fahrerkabine 16 aus zugänglich.

Das Gutleitelement 46 ist aus einem auf seiner Länge geschlossenen Rohr gebildet, das sich innerhalb des Sammelbehälters 18 schräg von dem Gehäuse 50 an einer Wand 70 zwischen der Fahrerkabine 16 und dem Sammelbehälter 18 bis unmittelbar vor die Abgabeöffnung des Eintragsförderers 42 erstreckt, so daß es an seinem oberen Endbereich von dem dort austretenden Gut beaufschlagt wird. Zu der Befestigung des Gutleitelements 46 sind nicht gezeigte Streben vorgesehen. Mit seinem unteren Endbereich ist das Gutleitelement 46 dichtend durch eine Öffnung 54 in einer Decke 66 des Gehäuses 50 geführt und dort befestigt, z. B. verschweißt; seine Endkante ist geringfügig zu einer trompetenförmigen Rundung aufgebördelt. Die obere Endkante des Gutleitelements 46 verläuft nicht radial zu seiner Längsachse, sondern zu dieser geneigt und nahezu auf der Horizontalen. Unterhalb der Oberkante wird das Gutleitelement 46 von einer Welle 56 durchdrungen, die sich in diesem Ausführungsbeispiel seitlich der Längsmittenachse befindet. Mit geringem axialen Abstand in Richtung zu dem unteren Ende des Gutleitelements 46 hin ist an dessen Innenseite ein Steg 58 angeschweißt, in den eine Bohrung 60 eingebracht ist.

Die Schließvorrichtung 48 ist in der Art einer Klappe aus einem Blech gebildet, das an seinen Endbereichen nach unten hutförmig abgebogen ist und somit das Gutleitelement 46 in seinem oberen Endbereich ab- und umschließt. Zwei parallel zu der Zeichenebene verlaufende Seitenbleche 62 der Schließvorrichtung 48 reichen bis über die Welle 56 und enthalten Bohrungen, in die die Welle 56 eingreift, so daß eine Schwenklagerung für die Schließvorrichtung 48 entsteht. An die Innenseite der Schließvorrichtung 48 ist ein Halter 64 angeschweißt, in dem ein Lager 65 gebildet ist. Das Lager 65 und die Öffnung 60 in dem Steg 58 liegen auf einer Linie, die sich parallel zu der Längsmittenachse des Gutleitelements 46 und zwischen der Welle 56 und dem ihr nächstgelegenen Wandbereich des Gutleitelements 46 erstreckt.

Das Gehäuse 50 besteht aus der Decke 66 und drei Seitenwänden 68, die als eine Einheit an die Wand 70 des Sammelbehälters 18 angeflanscht sind; nach unten ist das Gehäuse 50 offen und mit dem Raum in dem Sammelbehälter 18 verbunden. Die Decke 66 verläuft geringfügig geneigt, so daß sich bei leerem Sammelbehälter 18 auf ihr kein Schüttgut anlagern kann. Die Decke 66 wird, wie bereits erwähnt, von dem Gutleitelement 46 durchdrungen.

Die Probeentnahmevorrichtung 52 setzt sich aus einer Öffnung 74 und einem Entnahmebehälter 76 zusammen.

Die Öffnung 74 hat in diesem Ausführungsbeispiel einen quadratischen oder rechteckförmigen Querschnitt und ist in die Wand 70 eingearbeitet. In einem anderen Ausführungsbeispiel kann die Öffnung 74 auch einen runden Querschnitt haben, was jedoch eine entsprechende Anpassung der Form des Entnahmebehälters 76 erfordern würde.

Der Entnahmebehälter 76 enthält einen oben offenen Kasten 78 und einen Griff 80. Der Kasten 78 nimmt in der Seitenansicht eine unregelmäßige fünfeckige Form ein, aufgrund der eine sich mit der Wand 70 deckende Vorderwand 82 zu der Oberkante und einem Boden 84 rechtwinklig verläuft. Lediglich eine der Vorderwand 82 gegenüberliegende Rückwand 86 enthält einen schräg verlaufenden, unteren, langen Abschnitt 86' und einen zu der Oberkante rechtwinklig verlaufenden, kurzen, oberen Abschnitt 86'', so daß der Kasten 78 oben länger ist als unten. Im Übergangsbereich zwischen dem Boden 84 und der Vorderwand 82 ist eine kleine und sich über die Breite des Kastens 78 erstreckende Nut 88 vorgesehen, die auf zwei Seiten von dem abgekröpften Boden 84 und auf der dritten Seite von der Vorderwand 82 umschlossen ist. Die Nut 88 ist so bemessen, daß sie die Wand 70 in dem unteren Bereich der Öffnung 74 übergreifen und somit den gesamten Entnahmebehälter 76 arretieren kann. Während der Kasten 78 niedriger ausgebildet ist als die Öffnung 74, erstreckt sich die Vorderwand 70 außerhalb des Sammelbehälters 18 nach allen Seiten, insbesondere aber nach oben und nach unten über die Öffnung 74 hinaus, um diese vollständig zu bedecken und den Entnahmebehälter 76 daran zu hindern, in das Gehäuse 50 bzw. in den Sammelbehälter 18 zu fallen. Die Formgebung des Kastens 78 ermöglicht es, den Entnahmebehälter 76 mit dem Abschnitt 86'' auf die untere Kante der Öffnung 74 aufzusetzen und in ihm enthaltenes Probegut durch die Öffnung 74 in das Gehäuse 50 zurückzuschütten.

Der Griff 80 ist als eine Mulde ausgebildet, die an der Vorderwand 82 angebracht ist.

Zur Bedienung der Schließvorrichtung 48 ist schließlich eine Betätigungsvorrichtung 90 vorgesehen, die sich aus einem Seilzug 92, einem Zapfen 94, einer Feder 96 und einem Zugring 98 zusammensetzt.

Der Seilzug 92 erstreckt sich im Innern des Gutleitelements 46 von dem Lager 65 durch den Innenraum der Feder 96 und die Öffnung 60 um die umgebördelte Unterkante des Gutleitelements 46 durch ein Loch 100 in der Wand 70 zu dem Zugring 98 und ist stets gespannt. Anstatt des Seilzugs 92 könnte allerdings auch ein Gestänge oder dergleichen verwendet werden.

Der Zapfen 94 ist fest mit dem oberen Ende des Seilzugs 92 verbunden und in dem Lager 65 gehalten, wozu in dem Halter 64 eine entsprechende nicht gezeigte Öffnung vorgesehen ist, durch die der Seilzug 92 mit dem Zapfen 94 eingeführt werden kann.

Die Feder 96 ist als Schraubendruckfeder ausgebildet und zwischen der Oberseite des Stegs 58 und der Unterseite des Halters 64 mit einer gewissen Vorspannung eingesetzt und umgibt den Seilzug 92. Aufgrund ihrer Ausbildung und Anordnung schwenkt die Feder 96 bei nicht betätigtem Seilzug 92 die Schließvorrichtung 48 mit Blick auf die Zeichnung entgegen dem Uhrzeigerdrehsinn um die Welle 56, so daß sie normalerweise dichtend auf der Oberkante des Gutleitelements 46 aufliegt.

Der Zugring 98 befindet sich außerhalb des Sammelbehälters 18 in Anlage an der Wand 70 in der Fahrerkabine 16 und kann von dort aus betätigt werden.

Nach alledem funktioniert die erfindungsgemäße Entnahmevorrichtung 44 wie folgt.

Wenn eine Bedienungsperson wünscht, eine Probe des von dem Eintragsförderer 42 herangeführten Guts zu nehmen, zieht sie an dem Zugring 98 und schwenkt damit mittels des Seilzugs 92 die Schließvorrichtung 48 im Uhrzeigerdrehsinn, worauf das Gutleitelement 46 an seiner Oberseite geöffnet wird und Gut von dem Eintragsförderer 42 annimmt. Das aufgefangene Gut für die Probe rutscht innerhalb des Gutleitelements 46 nach unten und füllt den Kasten 78 des Entnahmebehälters 76. Nach sehr kurzer Zeit wird der Zugring 98 losgelassen, so daß aufgrund der Feder 96 die Schließvorrichtung 48 ein weiteres Eindringen von Gut in das Gutleitelement 46 verhindert. Anschließend wird der Entnahmebehälter 76 ein wenig angehoben, bis die Nut 88 den entsprechenden Bereich der Wand 70 freigibt und zu der Fahrerkabine 16 hin herausgezogen. Nachdem das Probegut analysiert worden ist, kann es wieder durch die Öffnung 74 in das Gehäuse 50 zurückgeschüttet werden. Wenn der Sammelbehälter 18 entleert wird, rutscht das Gut nach unten aus dem Gehäuse 50.

## Patentansprüche

1. Entnahmevorrichtung (44) für eine Gutmenge aus einem Gutstrom, insbesondere zum Nehmen einer Getreideprobe aus einem Sammelbehälter (18) einer Erntemaschine, mit einem Gutleitelement (46), das aufnahmeseitig von dem Gutstrom beaufschlagt wird und abgabeseitig zu einer Probeentnahmevorrichtung (52) führt, dadurch gekennzeichnet, daß das Gutleitelement (46) aufnahmeseitig eine Schließvorrichtung (48) zur wahlweisen Aufnahme der Gutmenge aufweist und im übrigen bis zu der Probeentnahmevorrichtung (52) gegenüber dem Gutstrom geschlossen ist.

2. Entnahmevorrichtung nach Anspruch 1, dadurch gekennzeichnet, daß die Probeentnahmevorrichtung (52) einen Entnahmebehälter (76) enthält, der abgabeseitig des Gutleitelements (46) vorgesehen ist.

3. Entnahmevorrichtung nach Anspruch 1 oder 2, dadurch gekennzeichnet, daß die Probeentnahmevorrichtung (52) in einem Gehäuse (50) aufgenommen ist, in das das Gutleitelement (46) dichtend mündet.

4. Entnahmevorrichtung nach Anspruch 1, dadurch gekennzeichnet, daß die Probeentnahmevorrichtung (52) in einem Gehäuse (50) aufgenommen ist, in das das Gutleitelement (46) dichtend mündet und das einen Entnahmebehälter (76) zur Annahme von Gut aus dem Gutleitelement (46) enthält.

5. Entnahmevorrichtung nach einem oder mehreren der vorherigen Ansprüche, dadurch gekennzeichnet, daß das Gehäuse (50) innerhalb eines den Gutstrom aufnehmenden Sammelbehälters (18) angeordnet ist und daß der Entnahmebehälter (76) von außerhalb des Sammelbehälters (18) zugänglich angebracht ist.

6. Entnahmevorrichtung nach einem oder mehreren der vorherigen Ansprüche, dadurch gekennzeichnet, daß die Schließvorrichtung (48) als eine Klappe ausgebildet ist, die mittels einer Betätigungsvorrichtung (90) in eine Öffnungs- bzw. eine Schließstellung bringbar ist.

7. Entnahmevorrichtung nach Anspruch 6, dadurch gekennzeichnet, daß die Schließvorrichtung (48) mittels einer Feder (96) oder dergleichen in der Schließstellung gehalten wird.

8. Entnahmevorrichtung nach Anspruch 6 oder 7, dadurch gekennzeichnet, daß die Betätigungsvorrichtung (90) im Bereich der Probeentnahmevorrichtung (52) bedienbar ist.

9. Entnahmevorrichtung nach einem oder mehreren der vorherigen Ansprüche, dadurch gekennzeichnet, daß das Gehäuse (50) an seiner Unterseite eine Auslaßöffnung zu dem Sammelbehälter (18) aufweist.

10. Entnahmevorrichtung nach einem oder mehreren der vorherigen Ansprüche, dadurch gekennzeichnet, daß der Entnahmebehälter (76) in das Gehäuse (50) oder in einer Wand (70) des Sammelbehälters (18) gehalten und dort arretierbar ist.

11. Entnahmevorrichtung nach Anspruch 10, dadurch gekennzeichnet, daß der Entnahmebehälter (76) gegenüber der Wand (70) dreh- oder kippbar ist.

12. Entnahmevorrichtung nach einem oder mehreren der vorherigen Ansprüche, dadurch gekennzeichnet, daß der Entnahmebehälter (76) einen Griff (80) aufweist.

13. Entnahmevorrichtung nach einem oder mehreren der vorherigen Ansprüche, dadurch gekennzeichnet, daß die Schließvorrichtung (48) um eine Welle (56) schwenkbar ist, und die Betätigungsvorrichtung (90) an einem exzentrisch dazu vorgesehenen Lager (65) angreift.
